# EUROPEAN PATENT APPLICATION

(11) **EP 3 572 314 A1**
(43) Date of publication of application: **27.11.2019**
(21) Application number: 18174009.3
(22) Date of filing: 24.05.2018
(51) Int. Cl.: B62M 3/08, A43B 1/00, A43B 5/14

(54) **CLEAT PEDAL AND SHOE**

(71) Applicant: Ingenieurbüro Kienhöfer GmbH, 76137 Karlsruhe (DE)
(72) Inventor: Kienhöfer, Carsten, 76137 Karlsruhe (DE)
(74) Representative: Durm Patentanwälte PartG mbB

(57) **Abstract**

The present invention relates to a pedal (10) for propelling a vehicle, comprising: a base element for contacting with a sole (26) of a shoe (22) of a person and receiving a force from a foot of said person, said base element being rotatably connected to a crank about a pedal rotation ax-is (18); and a first base magnet (14) and a second base magnet (16) which are attached to the base element for coupling to a corresponding first shoe magnet (28) and a corresponding second shoe magnet (30) which are attached to the sole of the shoe of the person, wherein the first base magnet and the second base magnet are aligned so that a north pole of the first base magnet and a south pole of the second base magnet face in the same direction. The present invention further relates to a shoe (22) for propelling a vehicle, a pedaling system (20) and a bicycle.

## Description

The present invention relates to a pedal for propelling a vehicle, a shoe for propelling a vehicle, a pedaling system including a pedal and a shoe, and a bicycle system.

A plurality of different vehicles is driven by muscular strength of a person. For instance, bicycles, but also recumbent bikes or trikes and others are used in a variety of leisure, transport and other applications. Usually, a human user powers the vehicle by means of his legs. The movement of the legs is translated into a movement of the vehicle. For this, usually a rotational movement being generated by the person is translated into a translatorial movement. For this, usually a pedaling system with a crank and a corresponding mechanical transformation are used.

Most pedals and pedaling systems are based on the human user pushing the pedal by stretching his leg to rotate the crank. If, however, only a pushing movement is exploited, a significant fraction of the person's leg muscles, in particular the hamstring muscle on the backside of the leg, is not used. To overcome this deficiency, it is possible to fix the foot to the pedal so that also in the reverting part of the rotational movement, in which the leg is bowed, a force can be exercised onto the pedal. In other words, the pedal can be pulled into the direction of the user when the shoe is fixed to the pedal.

One drawback of fixing the shoe to the pedal is that in case of an accident, e.g. a bike accident, a dangerous situation might occur when the connection from the shoe to the pedal cannot be released quickly. Consequently, it is important that the connection between shoe and pedal is quickly and comfortably releasable.

Approaches for fixing the shoe to the pedal include strips with adjustable or fixed length, latching or clicking mechanisms with corresponding constructions in a shoe sole and magnets in the pedal that correspond with metal inlays in a shoe sole.

In this respect, WO 2006/042622 A1 relates to a magnetic non-positive connection between a bicycle pedal and a shoe of a cyclist. Planar permanent magnet elements with a displaceable guided mounting in the open regions of the pedal generate the connection. The magnet elements undergo an even, easily detachable, magnetic non-positive interaction with soft magnetic non-positive connection elements inserted in the tread region of the conventional bicycle shoe. An unlimited relative movement, in particular in rotation, between the bicycle shoe and the pedal is possible without causing undesired separation of the magnetic non-positive connection.

Drawbacks of current solutions are that locking mechanisms often become unreliable or unusable when the shoe or the pedal is dirty and/or mud or other material blocks a connection or locking mechanism. One particular problem of current solutions including magnets is that the connection between the shoe and the pedal is often not strong enough to keep the shoe on the pedal when a steep climb needs to be mastered but is at the same time too strong to quickly and reliably release the shoe from the pedal to avoid an accident.

In view of this, it is an object of the present invention to overcome the above-mentioned deficiencies. In particular, it is an object of the present invention to provide a pedal for propelling a vehicle and a corresponding shoe which can be easily and comfortably connected and disconnected and which provide a strong connection during use albeit still being easily releasable.

To overcome this problem, a first aspect of the present invention relates to a pedal for propelling a vehicle, comprising:
a base element for contacting with a sole of a shoe of a person and receiving a force from a foot of said person, said base element being rotatably connected to a crank about a pedal rotation axis; and
a first base magnet and a second base magnet which are attached to the base element for coupling to a corresponding first shoe magnet and a corresponding second shoe magnet which are attached to the sole of the shoe of the person,
wherein the first base magnet and the second base magnet are aligned so that a north pole of the first base magnet and a south pole of the second base magnet face in the same direction.

In another aspect of the present invention, a shoe for propelling a vehicle is presented, comprising:
a sole for contacting with a base element of a pedal and transferring a force from a foot of a person to the base element; and
a first shoe magnet and a second shoe magnet that are attached to the sole for coupling to a corresponding first base magnet and a corresponding second base magnet that are attached to the base element,
wherein the first shoe magnet and the second shoe magnet are aligned so that a north pole of the first shoe magnet and a south pole of the second shoe magnet face in the same direction.

In yet another aspect, the present invention relates to a pedaling system, comprising a pedal and a shoe as defined above. Still further, an aspect of the present invention relates to a bicycle comprising a propelling system including a crank to which two pedals for propelling the bicycle as defined above are rotatably connected.

Preferred embodiments of the invention are defined in the dependent claims. It shall be understood that the claimed pedal, shoe, pedaling system and bicycle have similar and/or identical preferred embodiments as the claimed pedal and shoe, in particular as defined in the dependent claims and as disclosed herein.

The present invention is based on the idea that at least two magnets, i.e. elements including a ferromagnetic material, are fixed to a base element of the pedal. These base magnets interact with at least two corresponding magnets that are affixed to the shoe of the person (shoe magnets). Base magnets and shoe magnets are attracted to one another.

According to the invention, the first base magnet and the second base magnet are affixed to the pedal so that a north pole of the first base magnet and a south pole of the second base magnet face in the same direction. In other words, the base magnets are aligned in opposite directions. The north pole of one of the base magnets faces in the direction in which the south pole of the second base magnet faces. The shoe magnets are correspondingly also arranged so that a north pole of a first shoe magnet and a south pole of a second shoe magnet face in the same direction, i.e. also the shoe magnets face in opposite directions. In a connected state when the shoe is on the pedal, the first base magnet connects with the first shoe magnet and the second base magnet connects with the second shoe magnet. The north pole of one base magnet is positioned so that it interacts with the south pole of one shoe magnet. Consequently, when the shoe is on the pedal, the base magnets interact with the shoe magnets so that the shoe is drawn to the pedal. It is then possible to exercise a pulling force from the shoe on the pedal. Thereby, it becomes possible to not only make use of a pushing movement but also of a pulling movement when propelling the vehicle by means of muscular strength. To release the shoe from the pedal it is sufficient to move or rotate the shoe versus the pedal so that the base magnets and shoe magnets are no longer aligned. Thus, the construction of the present invention makes it possible to release the connection between the shoe and the pedal by a rotational or translatorial movement of the shoe by which the alignment of the north pole of one base magnet with the south pole of the corresponding shoe magnet is disturbed.

In this respect, it is advantageous if the construction allows that a movement of the shoe of the person brings a north pole of one sole in the vicinity of the north pole of one base magnet (or correspondingly for the south poles). Then, a repulsive force is generated between the corresponding base and shoe magnets and the shoe is released. This has the advantage that strong magnets can be used that have a high magnetic pull and that provide a strong connection between pedal and shoe. In case an emergency occurs and the shoe needs to be released from the pedal, the same high magnetic force can be used to release the shoe from the pedal.

The idea of the present invention is particularly useful for bicycles such as race or mountain bikes that are used by experienced riders. However, also hobby cyclists can advantageously make use of a pedal and a shoe as defined above.

In a preferred embodiment of the pedal, the north pole of the first base magnet and the south pole of the second base magnet face in a direction perpendicular to the pedal rotation axis; and/or parallel to a vector of the received force. Usually, the north pole of one base magnet and the south pole of the other face in the direction which is perpendicular to the pedal rotation axis and thus parallel to the vector of the received force, i.e. parallel to a direction of the received force. As used herein, the received force is the force that is received from the foot of the person, i.e. the pushing or pulling force that is generated when the person stretches or bows his leg. The direction in which these forces are applied is perpendicular to the pedal rotation axis since the pedal rotates correspondingly. The vector of the received force is oriented in this direction and corresponds to a centroid axis of the received force. Basically, the direction of the north pole of the first magnet and the south pole of the second base magnet is perpendicular to the base element. This orientation of the base magnet has the advantage that a maximum possible connecting force with the corresponding shoe magnets is obtained.

In another preferred embodiment, the first base magnet and the second base magnet are attached to the base element in a position in which the north pole of the first base magnet and the south pole of the second base magnet are in contact with the sole of the shoe of the person, when the shoe is positioned on the base element. To obtain a maximum possible retention force, it is advantageous to have the base magnets attached in positions in which they can directly contact the shoe magnets. Thereby, a retention force is maximized. The base magnets are as close as possible with their corresponding poles to the shoe magnets.

In another preferred embodiment, the first base magnet and the second base magnet are attached to the base element spaced apart from one another and at an equal distance from the pedal rotation axis. By positioning the base magnets at equal distances from the pedal rotation axis (preferably a non-zero distance), it becomes possible to release the connection between the base magnets and the shoe magnets by a rotational movement of the shoe versus the base element of the pedal. The shoe is rotated and the rotation brings the north pole of one base magnet in alignment with the north pole of a shoe magnet (and the south pole correspondingly), which results in a repulsive force as explained above. The shoe can be quickly released from the pedal to avoid an accident. The cyclist can release his foot in a quick movement. This arrangement of the base magnets allows that magnets with a high magnetic force can be used since the rotational movement allows making use of the magnetic force to release the shoe from the pedal. Thereby, the distance between the two base magnets is preferably chosen so that a comfortable rotational movement of the shoe and the foot of the person is allowed.

In another embodiment, the base element includes a front portion for contacting with a front part of the sole of the shoe situated on one side of the pedal rotation axis, and a rear portion for contacting with a rear part of the sole of the shoe on another side of the pedal rotation axis; and the first base magnet and the second base magnet are both attached to the base element in the same portion, preferably in the front portion. If both base magnets are arranged in the same portion, the rotational movement in order to release the connection between the pedal and the shoe by bringing equal poles of a base magnet and a shoe magnet into alignment can be carried out by rotating the shoe about the axis corresponding to the exerted force (or received force). Usually, it is only possible for a person to rotate a foot and a shoe, respectively, about an axis that runs through a point representing a centroid of the force that the person exercises on the pedal (pushing or pulling force). Since the pedal is rotatable about the pedal rotation axis, this vector of the received force cuts the pedal rotation axis in one point. By aligning the base magnets on one side of the pedal rotation axis, it is comfortably possible for the person to rotate the shoe about this axis of the received force and generate the repulsive force to release the shoe from the pedal.

In another preferred embodiment, the first base magnet and the second base magnet are attached to the base element in a position in which in a plane that is parallel to the sole of the shoe of the person an angle formed between the vector of the received force and the base magnets is between 10° and 30°, preferably between 15° and 25° and more preferably between 18° and 22°. In practical experiments, it has been found that it is preferable to have the connection between the pedal and the shoe released if the foot is rotated by about 20°. Such a rotation is small enough to be carried out quickly but large enough to not occur involuntarily. Consequently, in a plane that is parallel to the sole of the shoe, i.e. a plane that corresponds to a surface of the base element that connects to the sole of the shoe, the centroids of the base magnets are arranged at an angle of 20° versus the point in which the vector of the received force cuts this plane. Such an angle of about 20° makes it possible that the person releases his shoe from the pedal in a quick movement. However, the shoe is securely fixed during a ride with the vehicle in which vibrations cause small deviations from a perfect alignment of the base magnets with the shoe magnets.

In another preferred embodiment, the pedal comprises at least one further pair of base magnets including a further first base magnet and a further second base magnet, wherein the further first base magnet and the further second base magnet are aligned so that a north pole of the further first base magnet and a south pole of the further second base magnet face in the same direction. In total, at least four base magnets are used, each two of which are equally aligned, i.e. have their respective poles oriented in the same direction. By making use of four magnets, it becomes possible to arrange the magnets in positions on the base element so that only a willful and rotational movement of the foot versus the pedal results in the repulsive force to disconnect the shoe from the pedal. Involuntary movements caused by vibrations of the vehicle due to bumps or the like etc. might result in a misalignment which, however, does not cause the shoe to be pushed off the pedal.

In another preferred embodiment, the further first base magnet and the further second base magnet are attached to the base element in a position in which in a plane that is parallel to the sole of the shoe of the person an angle formed between the vector of the received force and the further base magnets is between 10° and 30°, preferably between 15° and 25° and further preferably between 18° and 22°. Preferably, also the further base magnets are arranged as described above so that a rotation of the shoe about the axis of the received force of about 20° causes the same poles of base magnets and shoe magnets to be aligned so that the shoe is pushed off the pedal. The safety of the person propelling the vehicle is further improved since only a voluntary movement causes the shoe to be released from the pedal.

In a preferred embodiment of the shoe of the present invention, the north pole of the first shoe magnet and the south pole of the second shoe magnet face in a direction perpendicular to the sole; and/or parallel to a vector of the transferred force. Corresponding to the pedal, also the shoe magnets are arranged so that a magnetic force of a connection between the shoe magnets and the base magnets is maximized. This is the case if the shoe magnets are arranged perpendicular to a sole of the shoe.

In another preferred embodiment, the shoe comprises at least one further pair of shoe magnets including a further first shoe magnet and a further second shoe magnet, wherein the further first shoe magnet and the further second shoe magnet are aligned so that a north pole of the further first shoe magnet and a south pole of the further second shoe magnet face in the same direction. Comparably to the pedal, also the shoe preferably includes a further pair of magnets to allow defining a movement to release the shoe from the pedal by means of a repulsive force from magnets having their corresponding poles oriented versus on another. By making use of a specific arrangement of shoe magnets, it becomes possible to define this movement.

In another preferred embodiment, the shoe comprises a detachable layer that is arranged between the shoe magnets and the ground and that can be detached from the shoe magnets to release metal attracted to the shoe magnets through the detachable layer. Such a layer can, e.g., be implemented in the form of a rubber layer that can be attached to the sole so that the magnets are covered. If a person wearing shoes with magnets walks over any metallic material, this material is attracted to the magnets in the shoe. This is often the case for iron turnings or the like. Also, other material might be picked up when walking over dirty ground. Such material can have the effect that the connection of the shoe magnets to the base magnets is weakened since the material stays between the corresponding magnets and increases their distance. The detachable layer can be used to release this material. If the detachable layer is attached to the sole and is arranged between the shoe magnets and the ground while walking, it becomes possible to release all material that is picked up by detaching the detachable layer prior to bringing the shoe in contact with the pedal and the base magnets in the pedal. Thus, the detachable layer has the advantage that it is easily possible to clean the shoe with the shoe magnets from all metallic material being attracted to the shoe magnets.

Preferably, the detachable layer is fixed to the shoe in at least one fixation point; and/or made from a rubber material. Preferably, the detachable layer is a rubber layer that is fixed to the shoe in one point so that it can be easily detached and attached again to clean it from magnetic material by pulling it away from the magnets.

Equally, in an embodiment of the pedal, it is also possible that the pedal includes a pedal-detachable layer that can be attached to the pedal and detached again to release all material being attracted by the base magnets in the pedal. For instance, it is possible that the pedal-detachable layer on the pedal is usually attached to the pedal while a shoe is in contact with the pedal and is only detached for cleaning the pedal from material being attracted to the base magnets.

These and other aspects of the invention will be apparent from and elucidated with reference to the embodiments described hereinafter. In the following drawings
- Figure 1: shows a schematic illustration of a pedal for propelling a vehicle according to the present invention in a top view;
- Figure 2: shows a schematic illustration of a shoe on a pedal in a sectional view perpendicular to a central axis of the shoe;
- Figure 3: shows another schematic illustration of a shoe on a pedal in a sectional view perpendicular to a pedal rotation axis;
- Figure 4: shows a schematic illustration of another embodiment of a pedal in a top view;
- Figure 5: shows a schematic illustration of another embodiment of a pedal in a top view;
- Figure 6: shows a schematic illustration of another embodiment of a pedal;
- Figure 7: shows a schematic illustration of a detachable layer of a shoe according to the present invention;
- Figure 8: shows a schematic illustration of a pedal with a detachable layer; and
- Figure 9: shows a schematic illustration of a bicycle according to the present invention.

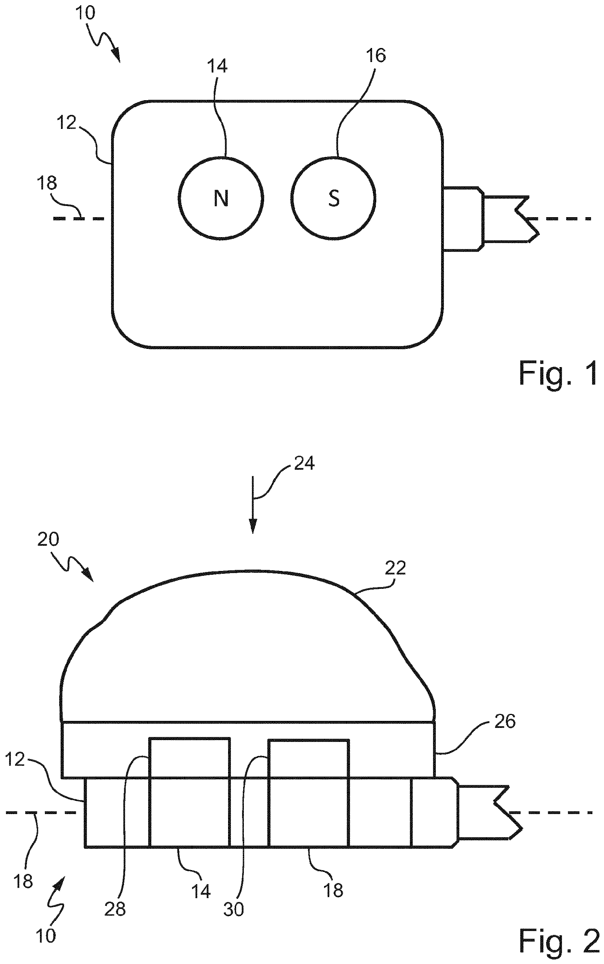

In Figure 1, a pedal 10 for propelling a vehicle according to the present invention is schematically illustrated. The pedal 10 includes a base element 12 which functions as a base upon which a shoe of a person can be positioned and a pedaling force can be received from a foot of a person. Attached to the base element 12 are a first base magnet 14 and a second base magnet 16. A north pole of the first base magnet 14, indicated by the letter N, and a south pole of the second base magnet 16, indicated by the letter S, face in the same direction. In the illustrated example, the north pole N of the first base magnet 14 and the south pole S of the second base magnet 16 face in a direction that is perpendicular to the image plane.

The base element 12 is usually made from metal and corresponds to a kind of metal frame. Usually, the base element 12 has spikes or grooves to prevent the shoe from slipping. The base element 12 is connected to a crank (not illustrated in the figure). Thereby, the connection to the crank is rotatable about a rotation axis 18. The pedal 10 can rotate about the pedal rotation axis 18.

In Figure 2, a pedaling system 20 including a pedal 10 and a shoe 22 is schematically illustrated in a sectional view parallel to the pedal rotation axis 18 and parallel to a vector (or a direction) of the received force 24. The shoe 22 includes a sole 26 which is in contact with the pedal 10, in particular with the base element 12 of the pedal 10. Integrated in the sole 26 are a first shoe magnet 28 and a second shoe magnet 30 which correspond to the first and second base magnets 14, 16. The present invention is based on the idea that two base magnets 14, 16 are integrated into the base element 12 in positions that correspond with the positions of the two shoe magnets 28, 30.

When the shoe 22 is positioned on the pedal 10, the shoe magnets 28, 30 are aligned with the base magnets 14, 16 so that the shoe 22 is attracted to the pedal 10. The shoe 22 is attached or, in other words, affixed, to the pedal 10 and it is then possible to exercise a pulling force on the pedal via the shoe. For this, the poles of the shoe magnets 28, 30 are arranged so that a south pole of the first shoe magnet 28 faces the north pole of the first base magnet 14.

The use of two base magnets 14, 16 with opposite orientation makes it possible that in addition to attracting the corresponding shoe magnets it is also possible to repel the shoe if the shoe magnets are aligned so that one pole of one base magnet is aligned with a corresponding pole of one of the shoe magnets. When the shoe 22 is moved with respect to the pedal 10, it is possible that the second shoe magnet 30 comes in the vicinity of the first base magnet 14. This results in a repulsive magnetic force, so that the shoe 22 is pushed away from the pedal. This allows a person wearing the shoe to quickly remove the shoe from the pedal. As illustrated, the shoe magnets 28, 30 are preferably as close as possible to the base magnets 14, 16, i.e. in direct contact.

Preferably, neodymium magnets are used as base magnets and as shoe magnets. These permanent magnets are among the strongest available magnets. Since the weight of the bike is usually important at least for professional riders, the use of magnets with high power at little weight is advantageous. For instance, with neodymium magnets a sufficient magnetic force can be obtained if the base magnets weigh less than 100 grams.

The base magnets 14, 16 are attached to the base element 12. For attaching the magnets to the base element, it is possible to use high-power glue or also a mechanic connection by means of a screw or the like.

The two shoe magnets 28 and 30 can be inserted into corresponding recesses in the sole 26. The shoe magnets 28, 30 might be fixed by means of glue or also by means of a mechanical connection such as a screw or the like.

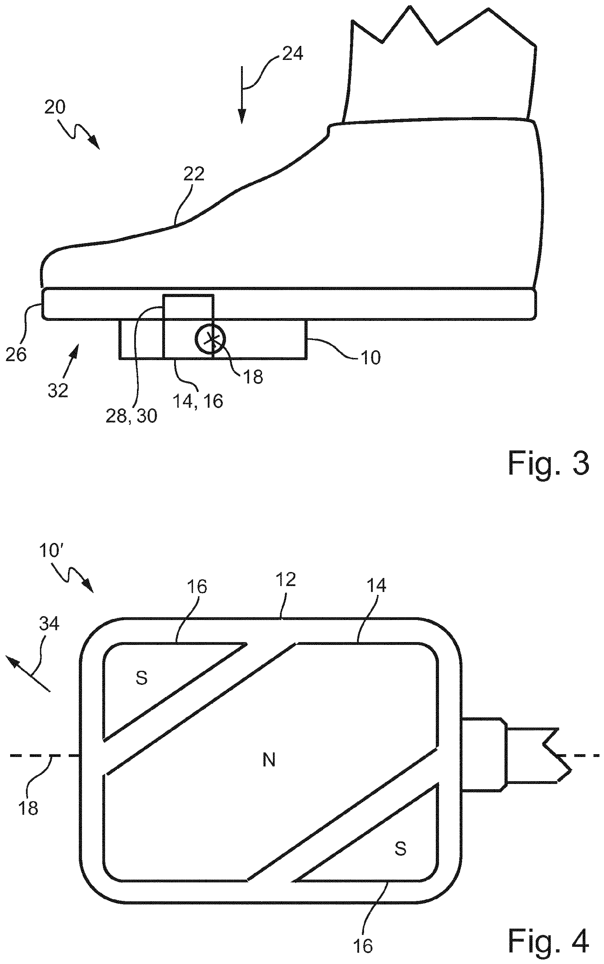

Figure 3 schematically illustrates the pedaling system 20 in another sectional view perpendicular to the pedal rotation axis 18. As illustrated, the shoe magnets 28, 30 are both positioned in a front part 32 of the sole 26 of the shoe 22. This arrangement makes it possible that a rotation of the shoe 22 about an axis that corresponds to a vector of the received force 24 can be used to decouple the shoe 22 from the pedal 10 and the base magnets 14, 16. Such a rotation can quickly and comfortably be carried out by a person wanting to release his foot from the pedal.

As illustrated in Figure 4, it is, however, also possible to make use of other arrangements of the base magnets 14, 16. In the illustrated embodiment of the pedal 10', the base element 12 includes a total of three base magnets. In comparison to the previously illustrated embodiment, in which two base magnets of equal strength and of equal size and weight are used, the embodiment of Figure 4 makes use of one first base magnet 14 which is of a larger size than the two second base magnets 16. Again, all base magnets 14, 16 face in the same direction, i.e. a direction that is parallel to a vector of the received force and orthogonal to the pedal rotation axis 18. It is to be understood that the shoe magnets in a corresponding shoe are arranged correspondingly. In this embodiment, it is thus possible to release the connection between the shoe and the pedal 10' by means of a lateral movement of the shoe in a beveled direction as indicated by the arrow 34, which brings the first base magnet 14 close to a second shoe magnet and its corresponding north pole so that a repulsive force is obtained.

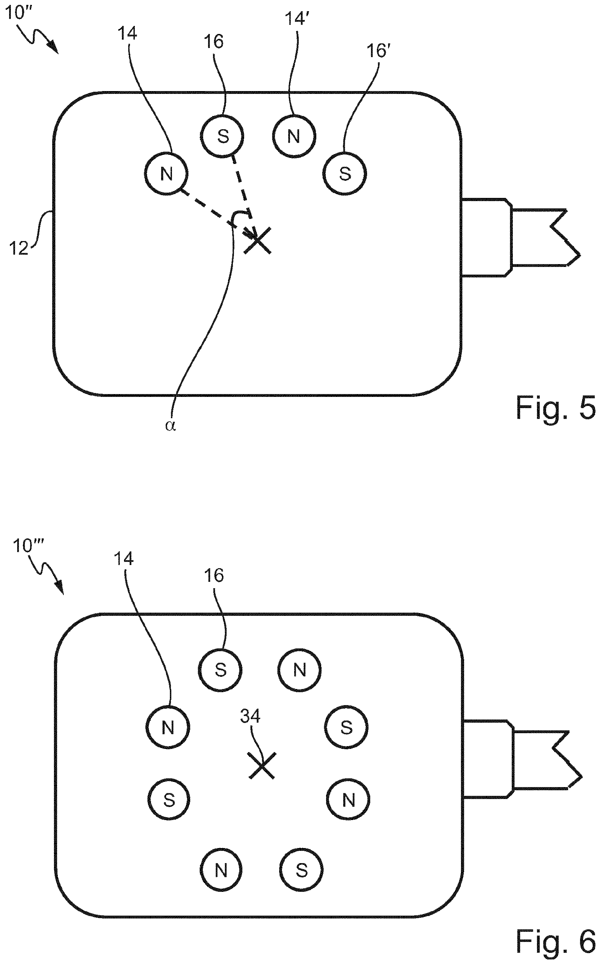

In Figure 5, yet another embodiment of a pedal 10" of the present invention is schematically illustrated in top view. The pedal 10" includes a first base magnet 14 and a second base magnet 16 as well as a further first base magnet 14' and a further second base magnet 16'. In the illustrated arrangement the first and second base magnets 14, 16 are arranged to incorporate an angle α of about 20° wherein this angle α is measured in a plane that is parallel to the sole of the shoe of the person or, in other words, parallel to a surface of the base element 12 (or parallel to the image plane in the illustrated view).

In Figure 6, yet another embodiment of the pedal 10"' is illustrated. The pedal 10"' includes a total of four first base magnets 14 and a total of four second base magnets 16. It is to be understood that a corresponding shoe has a corresponding number of shoe magnets.

As illustrated in Figure 6, it is possible to arrange a number of first and second base magnets 14, 16 in a circle having a center 34. If it is assumed that the center of the circle 34 corresponds to the center of the received force, it is possible for the person wearing the shoe to rotate the shoe about this center of the shoe. By this rotational movement corresponding poles are aligned with one another and the shoe is released from the pedal. This arrangement of the magnets has the effect that a random movement of the shoe versus the pedal, which may occur due to vibrations of the bike or the like, will usually not result in the shoe being released from the pedal.

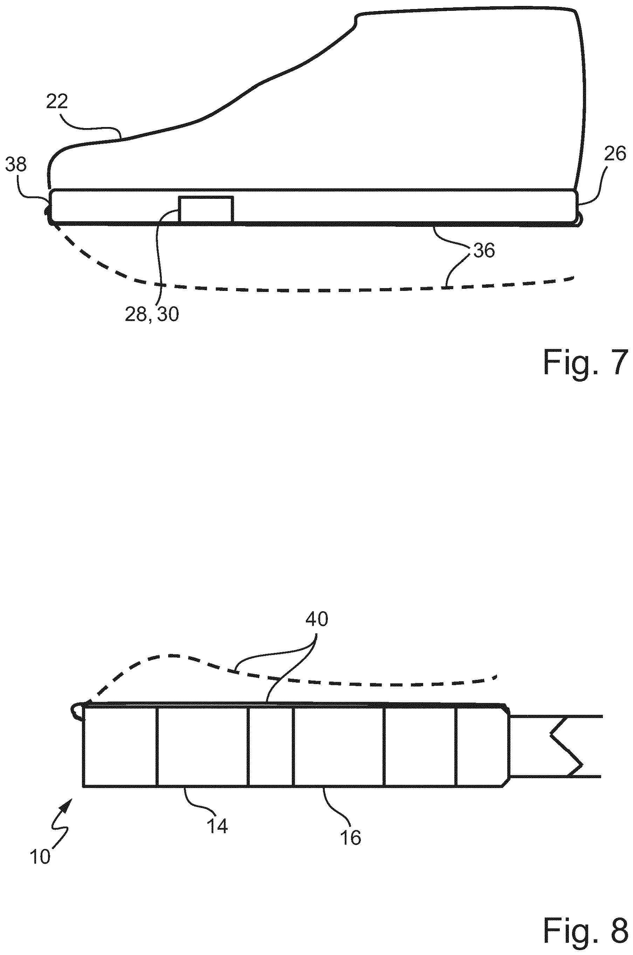

In Figure 7, an embodiment of a shoe 22 is illustrated in a sectional view. The shoe 22 has a detachable layer 36 which can be attached and detached to the sole 26 of the shoe 22. As illustrated, the dashed line represents the detachable layer in a position in which it is not attached to the sole 26. The solid line represents the detachable layer 36 when it is attached to the sole 26. This detachable layer 36 has the effect that it becomes possible to actively clean the shoe sole off material, in particular metallic particles, that is attracted to the shoe magnets 28,30.

If magnets are integrated into a shoe, this has the undesired side effect that whenever one walks on a dirty surface, material is collected at the magnets. By detaching the detachable layer from the sole 26, a distance between this collected material and the shoe magnet 28, 30 is increased so that the magnetic force is not sufficient to hold the material. Thus, the material falls off the detachable layer 36. Thereby, the sole can be cleaned prior to using the shoe 22 on a pedal. By using a cleaned shoe without any material, the magnetic force between the base magnets and the shoe magnets is maximized.

Preferably, the detachable layer is attached to the sole 26 in a fixation point 38 which is preferably in the area of the toe-cap or in the area of the heel. On the other side of the detachable layer 36 there can then be a clipping mechanism that allows to attach and release the detachable layer 36 from the sole 26. The detachable layer 36 may, e.g., include an elastic material such as a rubber material that allows stretching the detachable layer 36 to clamp it to the sole 26.

As illustrated in Figure 8, it is also possible to make use of a pedal-detachable layer 40 on the pedal 10. The concept is the same as described above. The base magnets 14, 16 are covered by the pedal-detachable layer 40. When the pedal-detachable layer 40 is detached and a distance between dirt or material that is attracted to the base magnets 14, 16 is increased, this material falls off, resulting in a clean surface for contacting to the shoe.

It is to be understood that it is possible to make use of the pedal and the shoe with one or two detachable layers being attached between the shoe magnets and the base magnets or without the detachable layers, i.e. the detachable layers being removed. In this respect, the detachable layers may be used in the form of covers that are used to protect the magnets in the shoe or in the pedal from material when they are not in use.

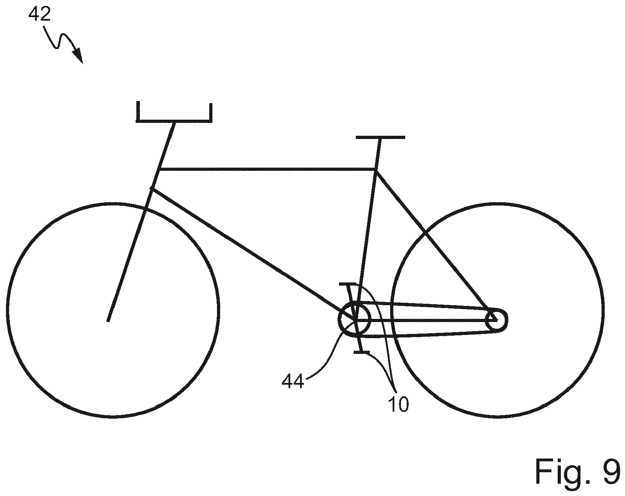

In Figure 9, a vehicle 42 of an aspect of the present invention is schematically illustrated. The example shows a bicycle including a crank 44 to which two pedals 10 are rotatably connected.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

## Claims

1. Pedal (10, 10', 10", 10"') for propelling a vehicle (42), comprising:
a base element (12) for contacting with a sole (26) of a shoe (22) of a person and receiving a force from a foot of said person, said base element being rotatably connected to a crank (44) about a pedal rotation axis (18); and
a first base magnet (14) and a second base magnet (16) which are attached to the base element for coupling to a corresponding first shoe magnet (28) and a corresponding second shoe magnet (30) which are attached to the sole of the shoe of the person,
wherein the first base magnet and the second base magnet are aligned so that a north pole of the first base magnet and a south pole of the second base magnet face in the same direction.

2. Pedal (10, 10', 10", 10"') as claimed in claim 1, wherein the north pole of the first base magnet (14) and the south pole of the second base magnet (16) face in a direction
perpendicular to the pedal rotation axis (18); and/or
parallel to a vector of the received force.

3. Pedal (10, 10', 10", 10"') as claimed in any one of the preceding claims, wherein the first base magnet (14) and the second base magnet (16) are attached to the base element (12) in a position in which the north pole of the first base magnet and the south pole of the second base magnet are in contact with the sole (26) of the shoe (22) of the person, when the shoe is positioned on the base element.

4. Pedal (10, 10', 10", 10"') as claimed in any one of the preceding claims, wherein the first base magnet (14) and the second base magnet (16) are attached to the base element (12) spaced apart from one another and at an equal distance from the pedal rotation axis (18).

5. Pedal (10, 10', 10", 10"') as claimed in any one of the preceding claims, wherein
the base element (12) includes a front portion for contacting with a front part (32) of the sole (26) of the shoe (22) situated on one side of the pedal rotation axis (18), and a rear portion for contacting with a rear part of the sole of the shoe on another side of the pedal rotation axis; and
the first base magnet (14) and the second base magnet (16) are both attached to the base element in the same portion, preferably in the front portion.

6. Pedal (10, 10', 10", 10"') as claimed in any one of the preceding claims, wherein the first base magnet (14) and the second base magnet (16) are attached to the base element (12) in a position in which in a plane that is parallel to the sole (26) of the shoe (22) of the person an angle formed between the vector of the received force and the base magnets is between 10° and 30°, preferably between 15° and 25° and more preferably between 18° and 22°.

7. Pedal (10, 10', 10", 10"') as claimed in any one of the preceding claims, comprising at least one further pair of base magnets including a further first base magnet (14') and a further second base magnet (16'), wherein the further first base magnet and the further second base magnet are aligned so that a north pole of the further first base magnet and a south pole of the further second base magnet face in the same direction.

8. Pedal (10, 10', 10", 10"') as claimed in claim 6 and 7, wherein the further first base magnet (14') and the further second base magnet (16') are attached to the base element (12) in a position in which in a plane that is parallel to the sole (26) of the shoe (22) of the person an angle (α) formed between the vector of the received force and the further base magnets is between 10° and 30°, preferably between 15° and 25° and further preferably between 18° and 22°.

9. Shoe (22) for propelling a vehicle (42), comprising:
a sole (26) for contacting with a base element (12) of a pedal (10, 10', 10", 10"') and transferring a force from a foot of a person to the base element; and
a first shoe magnet (28) and a second shoe magnet (30) that are attached to the sole for coupling to a corresponding first base magnet (14) and a corresponding second base magnet (16) that are attached to the base element,
wherein the first shoe magnet and the second shoe magnet are aligned so that a north pole of the first shoe magnet and a south pole of the second shoe magnet face in the same direction.

10. Shoe (22) as claimed in claim 9, wherein the north pole of the first shoe magnet (28) and the south pole of the second shoe magnet (30) face in a direction
perpendicular to the sole (26); and/or
parallel to a vector of the transferred force.

11. Shoe (22) as claimed in any one of claims 9 to 10 comprising at least one further pair of shoe magnets including a further first shoe magnet and a further second shoe magnet, wherein the further first shoe magnet and the further second shoe magnet are aligned so that a north pole of the further first shoe magnet and a south pole of the further second shoe magnet face in the same direction.

12. Shoe (22) as claimed in any one of claims 9 to 11, comprising a detachable layer (36) that is arranged between the shoe magnets (28, 30) and the ground and that can be detached from the shoe magnets to release metal attracted to the shoe magnets through the detachable layer.

13. Shoe (22) as claimed in claim 12, wherein the detachable layer (36) is
fixed to the shoe in at least one fixation point (38); and/or
made from a rubber material.

14. Pedaling system (20) comprising a pedal (10, 10', 10", 10"') for propelling a vehicle (42) as claimed in any one of claims 1 to 6 and a shoe (22) as claimed in any one of claims 9 to 13.

15. Bicycle comprising a propelling system including a crank (44) to which two pedals for propelling the bicycle as claimed in any one of claims 1 to 6 are rotatably connected.
